# DEMANDE DE BREVET EUROPEEN

(11) **EP 4 759 611 A1**
(43) Date de publication de la demande: **17.06.2026**
(21) Numéro de dépôt: 25222770.7
(22) Date de dépôt: 11.12.2025
(51) Int. Cl.: B60L 3/00, B60L 53/24

(54) **PROCÉDÉ DE CONTRÔLE D'UN CONVERTISSEUR DE TENSION DESTINÉ À ÉQUIPER UN VÉHICULE ÉLECTRIQUE OU HYBRIDE**

(30) Priorité: 13.12.2024 FR 2414143
(71) Demandeur: Valeo eAutomotive Germany GmbH, 91056 Erlangen (DE)
(72) Inventeur: FAVEROLLE, Pierre, 94460 VALENTON (FR); LAHBIL, Hicham, 94460 VALENTON (FR); REBAI, Ahmed, 94000 CRETEIL (FR)
(74) Mandataire: Valeo Powertrain Systems

(57) **Abrégé**

La présente invention concerne un procédé de contrôle d'un convertisseur de tension (2) comprenant un système d'interrupteurs (10), chaque interrupteur étant configuré pour prendre une position ouverte interdisant à un courant électrique de circuler par ledit interrupteur et une position fermée autorisant au courant électrique de circuler par ledit interrupteur, le système d'interrupteurs (10) étant piloté par une unité de contrôle (20), le procédé de contrôle mettant en œuvre au moins :
- une première étape au cours de laquelle l'unité de contrôle (20) reçoit une requête de couple,
- une deuxième étape au cours de laquelle l'unité de contrôle (20) pilote le système d'interrupteurs (10),
- une troisième étape au cours de laquelle l'unité de contrôle (20) réalise un contrôle du système d'interrupteurs (10).

## Description

La présente invention concerne le domaine de l'électronique et de l'électrotechnique, et plus particulièrement le domaine des convertisseurs de tension et les procédés de contrôle de tels convertisseurs de tension.

Les convertisseurs de tension sont des dispositifs d'électronique de puissance qui peuvent notamment être configurés pour générer un courant alternatif à partir d'un courant continu. Les convertisseurs de tension peuvent être intégrés dans les véhicules à moteur, en particulier dans les véhicules hybrides ou électriques, pour convertir le courant continu fourni par les batteries en un courant alternatif permettant d'alimenter une machine électrique du véhicule à moteur, cette machine électrique pouvant par exemple être utilisée pour fournir un couple aux roues du véhicule permettant la mise en mouvement du véhicule à moteur.

Classiquement, les convertisseurs de tension comprennent des interrupteurs montés les uns par rapport aux autres de sorte à permettre, par des séquences définies d'ouverture et de fermeture, la mise en phases du courant continu sortant du convertisseur de tension.

Lorsqu'un véhicule à moteur est à l'arrêt, et qu'aucune intention de démarrage ou de redémarrage du véhicule n'est identifiée, aucun couple ne doit transmis aux roues du véhicule, et des moyens de contrôle doivent être mis en œuvre pour s'assurer de cette non-transmission de couple par la machine électrique.

Classiquement, ces moyens de contrôle opèrent par une méthode comparative entre la requête de couple nul demandé et une estimation du couple généré par la machine électrique, ou une mesure de vitesse de rotation des roues, de sorte, qu'à l'arrêt, le couple généré par la machine électrique doit être associé à une vitesse de rotation égale à 0 rpm.

Une telle méthode comparative se base sur une estimation du couple généré par la machine électrique et ne présente donc pas une fiabilité optimale. La présente invention s'inscrit dans ce contexte et se propose d'améliorer la fiabilité du contrôle portant sur le couple généré par la machine électrique lorsque le véhicule à moteur est à l'arrêt.

Notamment, la présente invention se propose de pallier au moins certains des inconvénients de l'art antérieur au moyen d'un procédé de contrôle dans lequel le contrôle du couple généré par la machine électrique est déterminé de manière factuelle et non estimative.

Ainsi, la présente invention porte sur un procédé de contrôle d'un convertisseur de tension destiné à équiper un véhicule électrique ou hybride, le convertisseur de tension comprenant un système d'interrupteurs comprenant au moins un premier bras, un deuxième bras et un troisième bras connectés en dérivation sur une branche d'alimentation électrique d'une première polarité et sur une branche d'alimentation électrique d'une deuxième polarité, chaque bras comprenant deux interrupteurs disposés en série, le convertisseur de tension comprenant trois points milieux, chaque point milieu étant disposé respectivement entre les interrupteurs d'un desdits bras, les points milieux étant chacun apte à être connectés à une phase d'une machine électrique, chaque interrupteur étant configuré pour prendre une position ouverte interdisant à un courant électrique de circuler par ledit interrupteur et une position fermée autorisant au courant électrique de circuler par ledit interrupteur, le système d'interrupteurs étant piloté par une unité de contrôle, le procédé de contrôle mettant en œuvre au moins :
- une première étape au cours de laquelle l'unité de contrôle reçoit une requête de couple nul à appliquer à la machine électrique,
- une deuxième étape au cours de laquelle l'unité de contrôle pilote le système d'interrupteurs de sorte que chaque interrupteur est dans sa position ouverte,
- une troisième étape au cours de laquelle l'unité de contrôle réalise un contrôle d'une tension électrique ou d'un courant électrique au sein du système d'interrupteurs.

Le convertisseur de tension est un dispositif permettant d'assurer une conversion entre un courant électrique continu et un courant électrique alternatif. Le convertisseur de tension est intégré dans un véhicule électrique ou hybride et assure une continuité électrique entre une source d'énergie, fournissant un courant électrique continu, et une machine électrique du véhicule fonctionnant avec un courant électrique alternatif.

La machine électrique est apte à générer un couple permettant d'assurer la mise en mouvement du véhicule électrique ou hybride. Cette machine électrique est notamment commandée par un utilisateur installé à un poste de conduite du véhicule électrique ou hybride mais également par des systèmes automatiques permettant d'adapter le fonctionnement de la machine électrique.

Le pilotage du convertisseur de tension permet de moduler l'apport de courant à la machine électrique et donc le fonctionnement de cette dernière, et ce pilotage est réalisé par une unité de contrôle associée au système d'interrupteurs du convertisseur de tension. Plusieurs agencements d'interrupteurs peuvent être mis en œuvre pour réaliser cette conversion de courant continu en courant alternatif, notamment en fonction du nombre de phases de la machine électrique, mais on comprend que ce sont les commandes d'ouverture et de fermeture de ces interrupteurs, et donc le pilotage du convertisseur de tension, qui déterminent la quantité de courant à destination de la machine électrique.

Lorsqu'une requête de couple nul à appliquer à la machine électrique est reçue par l'unité de contrôle, cette dernière pilote le système d'interrupteurs de sorte qu'aucun courant électrique permettant à la machine électrique de générer un couple ne lui est transmis. Ce pilotage est opéré par une mise de l'ensemble des interrupteurs dans leur position ouverte dans laquelle un courant électrique ne peut pas circuler entre la source d'énergie et la machine électrique.

Une fois ce pilotage du système d'interrupteurs réalisé, l'unité de contrôle va vérifier que les interrupteurs sont factuellement dans leur position ouverte. On comprend que l'unité de contrôle n'opère pas une estimation du couple qui peut être généré par la machine électrique mais qu'il est selon l'invention configuré pour vérifier qu'aucun courant électrique ne peut parvenir à la machine électrique. On s'assure ainsi que la requête de couple nul est convenablement appliquée à la machine électrique.

Selon une caractéristique de l'invention, les interrupteurs sont des transistors à effet de champ ou iGBT.

Selon une caractéristique de l'invention, l'unité de contrôle comprend un dispositif de pilotage configuré pour transformer une requête de couple de la machine électrique en une tension électrique pilotant la position ouverte et la position fermée des interrupteurs, l'unité de contrôle comprenant un capteur de tension mesurant ladite tension électrique délivrée à au moins un interrupteur par le dispositif de pilotage, ledit contrôle de la tension électrique de la troisième étape étant un contrôle de la tension électrique délivrée aux interrupteurs par le dispositif de pilotage, l'unité de contrôle vérifiant que la tension électrique délivrée par le dispositif de pilotage est inférieure à un seuil maximal. Ce contrôle peut être une étape de relecture. Cette étape de contrôle peut être fait de façon analogique ou logique. À cet effet, l'unité de contrôle peut comprendre autant de capteurs de tension que d'interrupteurs. Alternativement, l'unité de contrôle peut comprendre autant de capteurs de tension que de bras dans le système d'interrupteurs.

Cette vérification de l'unité de contrôle par un contrôle de la tension en sortie du dispositif de pilotage permet de contrôler la position dans laquelle se trouve l'interrupteur associé. En effet, lorsque la tension électrique appliquée à l'interrupteur est inférieure au seuil maximal, on peut convenir que ledit interrupteur est dans sa position ouverte et donc qu'aucun courant électrique ne peut joindre la machine électrique pour lui permettre de générer un couple. Ainsi, par ce contrôle de la tension en sortie du dispositif de pilotage, on s'assure que la requête de couple nul à appliquer à la machine électrique est bien réalisée.

Selon une caractéristique de l'invention, le seuil maximal est égal à 1,5 V.

Selon une caractéristique de l'invention, le système d'interrupteurs est alimenté par une source d'énergie appliquant une tension aux bornes de chacun des bras, le procédé de contrôle étant caractérisé en ce qu'au cours de la troisième étape l'unité de contrôle vérifie qu'une intensité de courant électrique délivrée par la source d'énergie est inférieure à une valeur limite.

Selon une caractéristique de l'invention, la vérification de l'intensité du courant électrique délivrée par la source d'énergie est réalisée par une mesure dudit courant électrique au moyen d'un capteur courant continu de l'unité de contrôle.

Selon une caractéristique de l'invention, le capteur courant continu est positionné sur l'une ou l'autre des branches d'alimentation électrique. De préférence, le capteur courant continu est positionné sur une branche de polarité positive

En vérifiant l'intensité du courant électrique alimentant le système d'interrupteurs on peut déterminer la consommation en énergie électrique de la machine électrique. En effet, si aucun courant électrique ne circule par le système d'interrupteurs alors la machine électrique n'est pas alimentée en énergie électrique et donc la requête de couple nul est correctement appliquée.

Selon une caractéristique de l'invention, au cours de la troisième étape du procédé de contrôle l'unité de contrôle vérifie que l'intensité du courant électrique de chacun des points milieux connectés aux phases de la machine électrique est inférieure à une valeur seuil. Cette valeur seuil peut être inférieure à 10A, notamment inférieure à 7A, notamment inférieure à 5A.

Selon une caractéristique de l'invention, l'unité de contrôle comprend autant de capteurs de courant de phase que de points milieux, le procédé de contrôle étant caractérisé en ce que l'unité de contrôle vérifie que chaque point milieu délivre un courant d'une intensité inférieure à une valeur seuil. Cette valeur seuil peut être inférieure à 40 Arms, notamment inférieure à 30 Arms, notamment inférieure à 20 Arms.

Cette vérification de l'intensité du courant électrique délivrée par les points milieux permet de contrôler la quantité de courant électrique sortant du système d'interrupteurs pour rejoindre la machine électrique. Lorsque cette intensité du courant électrique est inférieure à la valeur seuil, on s'assure que la machine électrique n'est pas suffisamment alimentée pour générer un couple à transmettre aux roues et donc que la requête de couple nul est convenablement appliquée.

Selon une caractéristique de l'invention, au cours de la troisième étape l'unité de contrôle mesure la position d'un rotor de la machine électrique par rapport à un stator de ladite machine électrique.

Selon une caractéristique de l'invention, l'unité de contrôle est configurée pour traiter une donnée de vitesse de déplacement du véhicule, la troisième étape étant mise en œuvre lorsque ladite vitesse de déplacement du véhicule est nulle.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :

[Fig.1] représente schématiquement un convertisseur de tension conforme à la présente invention destiné à alimenter en énergie électrique une machine électrique ;

[Fig.2] représente schématiquement le convertisseur de tension visible sur la figure 1 dans lequel une unité de contrôle pilote le fonctionnement d'un système d'interrupteurs du convertisseur de tension ;

[Fig.3] représente schématiquement le convertisseur de tension visible sur les figures 1 et 2, dans lequel des interrupteurs du système d'interrupteurs sont chacun dans une position ouverte interdisant la circulation d'un courant électrique par lesdits interrupteurs ;

[Fig.4] représente schématiquement le convertisseur de tension visible sur les figures 1 à 3, dans lequel l'unité de contrôle vérifie par l'intermédiaire de capteurs et d'une unité de surveillance que les interrupteurs sont dans leur position ouverte.

Les caractéristiques, les variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieure.

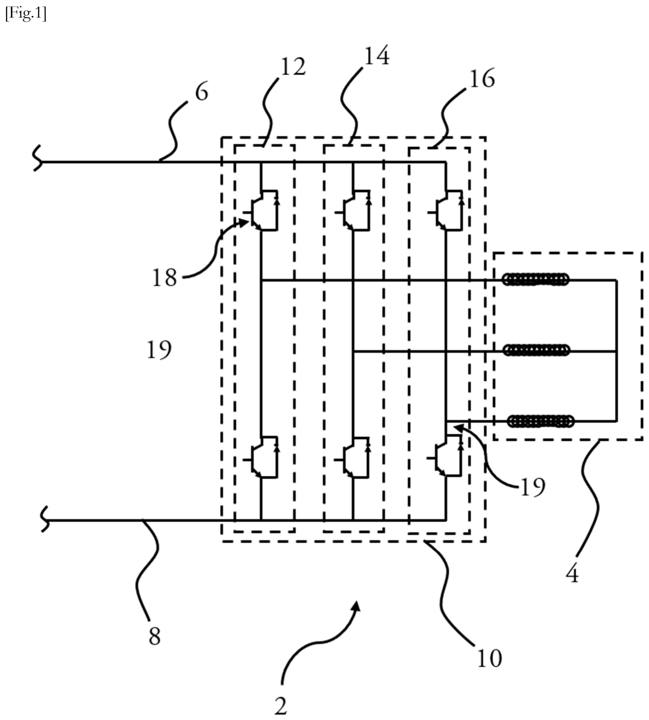

La figure 1 représente schématiquement un convertisseur de tension 2 destiné à équiper un véhicule électrique ou hybride. Dans le mode de réalisation représenté, le convertisseur de tension 2 est un onduleur triphasé destiné à alimenter en énergie électrique une machine électrique 4 du véhicule électrique ou hybride. La machine électrique 4 est configurée pour générer, à la demande de l'utilisateur, un couple permettant d'entraîner en rotation des roues du véhicule électrique ou hybride, de sorte à permettre la mise en mouvement dudit véhicule électrique ou hybride. Ce couple est obtenu par une rotation d'un rotor de la machine électrique 4 par rapport à un stator de ladite machine électrique 4, généré par l'alimentation électrique, via le convertisseur de tension, d'éléments électromagnétiques associées au stator et/ou au rotor.

A cet effet, le convertisseur de tension 2 est connecté électriquement à une source d'énergie telle qu'une source d'énergie. Plus spécifiquement, cette source d'énergie est connectée électriquement au convertisseur de tension 2 par une branche d'alimentation électrique d'une première polarité, ici une branche de polarité positive 6, et par une branche d'alimentation électrique d'une deuxième polarité, ici une branche de polarité négative 8.

Le convertisseur de tension 2 comprend un système d'interrupteurs 10 comprenant un premier bras 12, un deuxième bras 14 et un troisième bras 16. Chacun de ces premier, deuxième et troisième bras 12, 14, 16 est connecté en dérivation sur la branche de polarité positive 6 et sur la branche de polarité négative 8.

Chaque bras 12, 14, 16 comprend deux interrupteurs 18 disposés en série sur le bras 12, 14, 16 considéré. Dans le mode de réalisation représenté, les interrupteurs 18 sont des transistors à effet de champ et plus précisément des transistors à effet de champ à grille isolée plus connus sous l'acronyme anglais « MOSFET » pour *metal-oxide-semiconductor field effet transistor.* Ainsi, les interrupteurs 18 comprennent chacun trois bornes, parmi lesquelles une première borne, communément appelée « grille » et au niveau de laquelle des informations de pilotage sont transmises à l'interrupteur 18, une deuxième borne, communément appelée « source » et au niveau de laquelle un courant électrique est apte à entrer dans l'interrupteur 18, et une troisième borne communément appelée « drain » et au niveau de laquelle un courant électrique est apte à sortir de l'interrupteur 18.

Plus précisément et tels que visibles sur la figure 1, les interrupteurs 18 sont des transistors MOSFET de type N à enrichissement. Bien entendu, la présente invention s'applique *mutatis mutandis à* des transistors MOSFET de type C ou encore à des transistors IGBT.

Les interrupteurs 18 sont chacun aptes à prendre une position ouverte interdisant à un courant électrique de circuler par ledit interrupteur 18 considéré et une position fermée autorisant à un courant électrique de circuler par ledit interrupteur 18 considéré.

Le pilotage des interrupteurs 18 est opéré par une unité de contrôle de sorte que le système d'interrupteurs 10 est apte à réaliser une conversion d'un courant électrique continu provenant de la source d'énergie en un courant électrique alternatif pour alimenter la machine électrique 4. De plus, l'unité de contrôle pilote la fréquence d'ouverture et de fermeture des interrupteurs 18, de sorte à adapter le couple généré par la machine électrique 4 à la demande de l'utilisateur.

Chaque bras 12, 14, 16 présente un point milieu 19 s'étendant entre les interrupteurs 18 disposés sur un même bras 12, 14, 16, ces points milieux étant respectivement reliés à une phase de la machine électrique 4.

Le fonctionnement du pilotage du système d'interrupteurs 10, et le séquençage d'ouverture et de fermeture des interrupteurs pour convertir le courant traversant le système d'interrupteurs, est bien connu de l'art antérieur et il n'est dès lors pas nécessaire de rentrer ici dans les détails de ce fonctionnement.

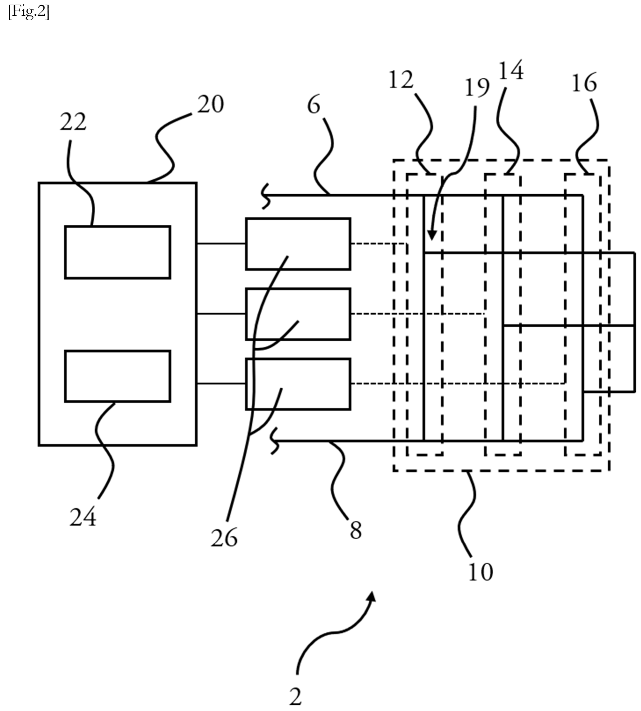

La figure 2 représente schématiquement une unité de contrôle 20 conforme à ce qui a été décrit précédemment. L'unité de contrôle 20 comprend au moins une unité de traitement 22, une unité de surveillance 24 et des dispositifs de pilotage 26.

L'unité de traitement 22 communique avec les dispositifs de pilotage 26, chaque bras 12, 14, 16 étant associé à un dispositif de pilotage 26. Les dispositifs de pilotage 26 permettent de contrôler la position ouverte ou fermée des interrupteurs 18 du bras 12, 14, 16 associé. En d'autres termes, les dispositifs de pilotage 26 sont configurés pour transformer une requête de couple reçue par l'unité de contrôle 20, et plus spécifiquement par l'unité de traitement 22, en une tension électrique pilotant la séquence d'ouverture des interrupteurs 18.

Lorsque le véhicule électrique ou hybride équipé du convertisseur de tension 2 est à l'arrêt, il convient, en conformité des réglementations en vigueur dans certains pays, de s'assurer que le couple généré par la machine électrique 4 est nul, c'est-à-dire que la position du rotor par rapport à un stator de la machine électrique 4 du véhicule électrique reste fixe.

À cet effet, l'unité de contrôle 20 est configurée pour traiter une donnée de vitesse de déplacement du véhicule et pour mettre en œuvre le procédé de contrôle lorsque ladite vitesse de déplacement du véhicule électrique ou hybride est nulle.

Pour s'assurer que le couple généré par la machine électrique 4 est nul, la présente invention met en œuvre un procédé de contrôle qui va être désormais décrit en détails.

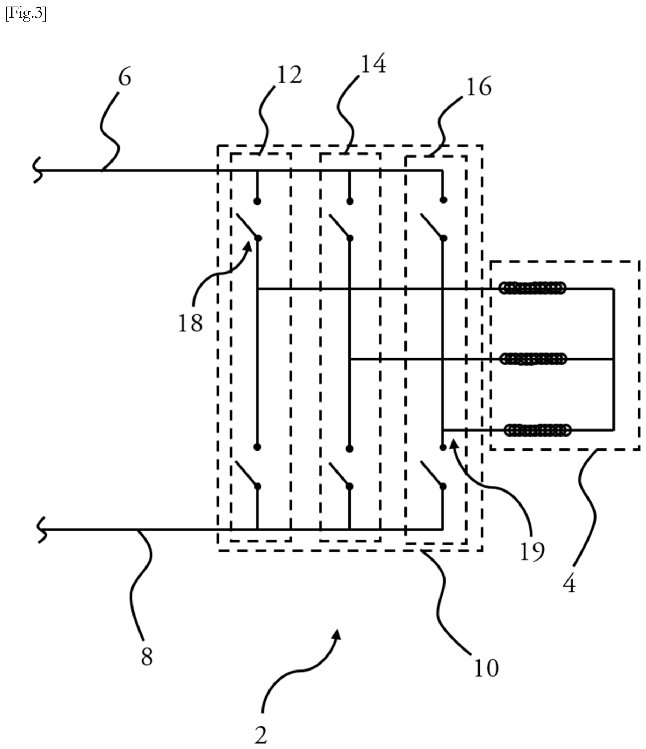

Plus spécifiquement, le procédé de contrôle selon l'invention met en œuvre au moins une première étape au cours de laquelle l'unité de contrôle 20 reçoit une requête de couple nul à appliquer à la machine électrique 4. Cette requête de couple nul peut être transmise, par exemple, lorsque des capteurs détectent que le véhicule électrique ou hybride est à l'arrêt. Puis, au cours d'une deuxième étape du procédé de contrôle, l'unité de contrôle 20 pilote le système d'interrupteurs 10, de sorte que, tel que visible sur la figure 3, chaque interrupteur 18 est dans sa position ouverte. Cette deuxième étape du procédé de contrôle est opérée par un pilotage spécifique de la tension électrique transmise depuis les dispositifs de pilotage 26 jusqu'au bras 12, 14, 16 associé.

Au cours d'une troisième étape du procédé de contrôle, l'unité de contrôle 20 vérifie que chaque interrupteur 18 est dans sa position ouverte, par un contrôle de la tension électrique ou d'un courant électrique au sein du système d'interrupteurs 10. Cette vérification permet de s'assurer que le couple généré par le moteur est, de façon factuelle, nul. On comprend que l'étape de vérification opérée au cours de la troisième étape du procédé de contrôle permet de donner une indication précise sur la bonne mise en œuvre de la deuxième étape et non une estimation du couple généré par la machine électrique 4.

En effet, lorsque l'ensemble des interrupteurs 18 sont dans leur position ouverte, aucun courant électrique ne peut rejoindre la machine électrique 4 en passant par le système d'interrupteurs 10. Ainsi, en s'assurant que chaque interrupteur 18 est dans sa position ouverte, on s'assure que la machine électrique 4 génère un couple nul et que la vitesse de rotation du rotor est de l'ordre de 0 rpm.

La vérification de la position des interrupteurs 18 par l'unité de contrôle 20 au cours de la troisième étape peut être réalisée par plusieurs méthodes indépendantes et cumulatives. L'utilisation d'une pluralité de méthodes indépendantes permet d'améliorer la fiabilité des informations relatives à la position ouverte ou fermée des interrupteurs 18.

Une première méthode consiste à mesurer la tension électrique délivrée par les dispositifs de pilotage 26 aux interrupteurs 18. Tel qu'évoqué précédemment, la position ouverte ou fermée des interrupteurs 18 est pilotée selon que la tension électrique délivrée aux interrupteurs 18 est plus ou moins élevée. En effet, le fonctionnement des interrupteurs 18 est tel que le passage entre la position ouverte et la position fermée est contrôlé par la tension électrique appliquée à la grille de l'interrupteur 18. Aussi, l'unité de contrôle 20 comprend un capteur de tension 28 configuré pour mesurer la tension électrique délivrée par un dispositif de pilotage 26 à un bras 12, 14, 16 associé du système d'interrupteurs 10.

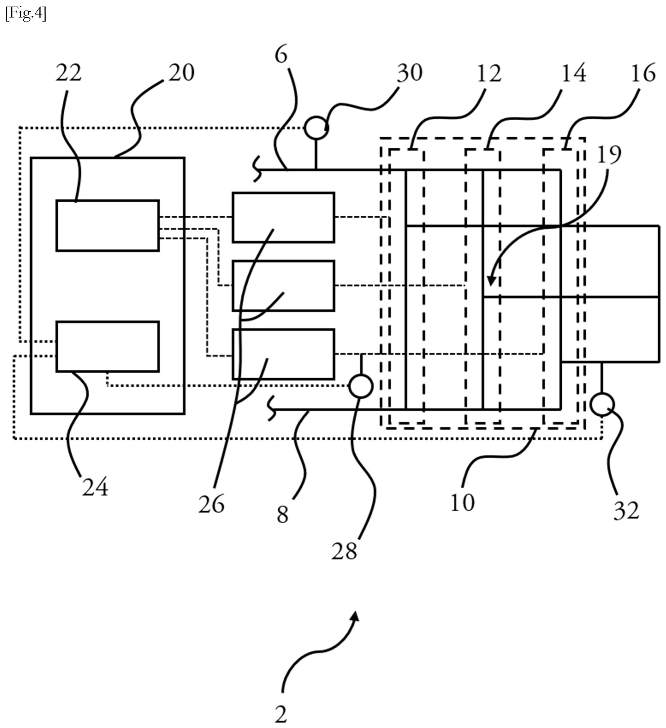

Tel que visible sur la figure 4, un seul capteur de tension 28 est représenté, mais il est toutefois à noter que, dans le mode de réalisation représenté, un capteur de tension 28 est disposé sur chaque ligne électrique joignant un dispositif de pilotage 26 au bras 12, 14, 16 associé.

Ainsi, au cours de la troisième étape du procédé de contrôle, l'unité de contrôle 20, et plus spécifiquement l'unité de de surveillance 24, vérifie que la tension électrique délivrée par le dispositif de pilotage 26 est inférieure à un seuil maximal.

Tel qu'évoqué précédemment et dans le mode de réalisation représenté, l'interrupteur 18 est un transistor MOSFET de type N. Aussi, l'interrupteur 18 est dans une position ouverte, c'est-à-dire une position dans laquelle aucun courant électrique ne peut circuler par l'interrupteur 18, lorsque la tension électrique appliquée à la grille est inférieure au seuil maximal. Ce seuil maximal est égal à 1,5 V et correspond à la tension de seuil minimale à appliquer à la grille pour qu'un canal conducteur entre le drain et la source se forme. En d'autres termes, lorsque la tension électrique appliqué à la grille de l'interrupteur 18 est inférieure à 1,5 V l'interrupteur 18 est dans sa position ouverte.

Ainsi, au cours de la troisième étape, l'unité de contrôle 20 réalise un contrôle de la tension électrique au sein du système d'interrupteurs 10 qui se matérialise par une vérification, par l'intermédiaire du capteur de tension 28 et de l'unité de surveillance 24, du fait que la tension électrique délivrée par le dispositif de pilotage 26 est inférieure à 1,5 V. Si, cette tension électrique est bien inférieure au seuil maximal, c'est-à-dire 1,5 V, alors on s'assure que les interrupteurs 18 sont correctement dans leur position ouverte.

Une deuxième méthode consiste à mesurer l'intensité électrique du courant électrique délivré par la source d'énergie au système d'interrupteurs 10. La mesure de l'intensité électrique du courant électrique circulant en amont ou en aval du système d'interrupteurs permet de définir si un courant électrique passe ou non par le système d'interrupteurs 10. Ainsi, lorsque la source d'énergie ne délivre pas de courant électrique au système d'interrupteurs 10, on s'assure que la machine électrique 4 n'est pas alimenté en énergie électrique.

Il en résulte que l'intensité électrique du courant électrique délivré par la source d'énergie au système d'interrupteurs 10 est inférieure à une valeur limite. Cette valeur limite correspond à la valeur d'intensité électrique minimale permettant à la machine électrique 4 de générer un couple.

Pour mesurer l'intensité électrique du courant électrique délivré par la source d'énergie au système d'interrupteurs 10, l'unité de contrôle 20 comprend un capteur courant continu 30. Ce capteur courant continu 30 peut être indifféremment positionné sur la branche d'alimentation électrique d'une première polarité, c'est-à-dire la branche de polarité positive 6, ou sur la branche d'alimentation électrique d'une deuxième polarité, c'est-à-dire la branche de polarité négative 8. Dans le mode de réalisation représenté par la figure 4, le capteur courant continu 30 a été arbitrairement positionné sur la branche de polarité positive 6. Il convient de noter que le capteur courant continu 30 doit être disposé sur l'une desdites branches de polarité 6, 8 de sorte que la mesure réalisée par le capteur courant continu 30 indique l'intensité électrique du courant électrique aux bornes des interrupteurs 18. Plus précisément, le capteur courant continu 30 est disposé de sorte à mesurer l'intensité du courant électrique circulant dans la branche de polarité positive 6.

Ainsi, via cette deuxième méthode, au cours de la troisième étape du procédé de contrôle, l'unité de contrôle 20 vérifie que l'intensité électrique du courant électrique délivré par la source d'énergie au système d'interrupteurs 10 est inférieure à une valeur limite.

Une troisième méthode consiste à mesurer l'intensité électrique au niveau d'au moins l'un des points milieux 19. En effet, tel qu'évoqué précédemment, les points milieux 19 sont disposés sur chacun des bras 12, 14, 16 entre les deux interrupteurs 18 du bras 12, 14, 16 considéré et sont reliés à une phase par une liaison appropriée. Aussi, lorsque les deux interrupteurs 18 du bras 12, 14, 16 considéré sont dans leur position ouverte, aucun courant électrique ne peut rejoindre la machine électrique 4 en sortie d'un point milieu 19.

À cet effet, l'unité de contrôle 20 comprend un capteur de courant de phase 32 disposé entre un des points milieux 19 et la phase correspondante de la machine électrique 4. Alternativement, l'unité de contrôle 20 peut comprendre un capteur de courant de phase 32 associé à chacun des points milieux 19. Au cours de la troisième étape du procédé de contrôle, dans cette troisième méthode, l'unité de contrôle 20, par l'intermédiaire du capteur de courant de phase 32 et de l'unité de surveillance 24, vérifie que l'au moins un point milieu 19 auquel est associé le capteur de courant de phase 32 délivre un courant électrique d'intensité électrique inférieure à une valeur seuil.

En plus de l'une des méthodes évoquées précédemment, l'unité de contrôle 20 peut opérer, lors de la troisième étape, un contrôle de la position du rotor de la machine électrique 4 par rapport au stator de ladite machine électrique 4.

La présente invention telle qu'elle vient d'être décrite atteint bien le but qu'elle s'était fixé en proposant un procédé de contrôle permettant, d'une part d'appliquer une requête de couple nul à une machine électrique, et d'autre part de vérifier que la requête de couple nul a été convenablement appliquée à la machine électrique par une vérification de la tension électrique aux bornes des interrupteurs d'un système d'interrupteurs du convertisseur de tension.

La présente invention ne saurait toutefois se limiter aux moyens et configurations décrits et illustrés ici et elle s'étend également à tout moyen et toute configuration équivalents ainsi qu'à toute combinaison techniquement opérante de tels moyens.

## Revendications

1. Procédé de contrôle d'un convertisseur de tension (2) destiné à équiper un véhicule électrique ou hybride, le convertisseur de tension (2) comprenant au moins un système d'interrupteurs (10) comprenant un premier bras (12), un deuxième bras (14) et un troisième bras (16) connectés en dérivation sur une branche d'alimentation électrique d'une première polarité (6) et sur une branche d'alimentation électrique d'une deuxième polarité (8), chaque bras (12, 14, 16) comprenant deux interrupteurs (18) disposés en série, le convertisseur de tension (2) comprenant trois points milieux (19), chaque point milieu (19) étant disposé respectivement entre les interrupteurs (18) d'un desdits bras (12, 14, 16), les points milieux (19) étant chacun apte à être connectés à une phase d'une machine électrique (4), chaque interrupteur (18) étant configuré pour prendre une position ouverte interdisant à un courant électrique de circuler par ledit interrupteur (18) et une position fermée autorisant au courant électrique de circuler par ledit interrupteur (18), le système d'interrupteurs (10) étant piloté par une unité de contrôle (20), le procédé de contrôle mettant en œuvre au moins :
- une première étape au cours de laquelle l'unité de contrôle (20) reçoit une requête de couple nul à appliquer à la machine électrique (20),
- une deuxième étape au cours de laquelle l'unité de contrôle (20) pilote le système d'interrupteurs (10) de sorte que chaque interrupteur (18) est dans sa position ouverte,
- une troisième étape au cours de laquelle l'unité de contrôle (20) réalise un contrôle d'une tension électrique ou d'un courant électrique au sein du système d'interrupteurs (10).

2. Procédé de contrôle selon la revendication 1, dans lequel l'unité de contrôle (20) comprend un dispositif de pilotage (26) configuré pour transformer une requête de couple de la machine électrique (4) en une tension électrique pilotant la position ouverte et la position fermée des interrupteurs (18), l'unité de contrôle (20) comprenant un capteur de tension (28) mesurant ladite tension électrique délivrée à au moins un interrupteur (18) par le dispositif de pilotage (26), ledit contrôle de la tension électrique de la troisième étape étant un contrôle de la tension électrique délivrée aux interrupteurs (18) par le dispositif de pilotage (26), l'unité de contrôle (20) vérifiant que la tension électrique délivrée par le dispositif de pilotage (26) est inférieure à un seuil maximal.

3. Procédé de contrôle selon la revendication 2, dans lequel le seuil maximal est égal à 1,5 V.

4. Procédé de contrôle selon l'une quelconque des revendications 1 à 3, dans lequel le système d'interrupteurs (10) est alimenté par une source d'énergie appliquant une tension aux bornes de chacun des bras (12, 14, 16), le procédé de contrôle étant **caractérisé en ce qu'**au cours de la troisième étape l'unité de contrôle (20) vérifie qu'une intensité de courant électrique délivrée par la source d'énergie est inférieure à une valeur limite.

5. Procédé de contrôle selon la revendication 4, dans lequel la vérification de l'intensité du courant électrique délivrée par la source d'énergie est réalisée par une mesure dudit courant électrique au moyen d'un capteur courant continu (30) de l'unité de contrôle (20).

6. Procédé de contrôle selon la revendication 5, dans lequel le capteur courant continu (30) est positionné sur l'une ou l'autre des branches d'alimentation électrique (6, 8).

7. Procédé de contrôle selon l'une quelconque des revendications 1 à 6, le procédé de contrôle étant **caractérisé en ce qu'**au cours de la troisième étape l'unité de contrôle (20) vérifie que l'intensité du courant électrique de chacun des points milieux (19) connectés aux phases de la machine électrique (4) est inférieure à une valeur seuil.

8. Procédé de contrôle selon la revendication 7, dans lequel l'unité de contrôle (20) comprend autant de capteurs de courant de phase (32) que de points milieux (19), le procédé de contrôle étant **caractérisé en ce que** l'unité de contrôle (20) vérifie que chaque point milieu (19) délivre une intensité de courant électrique inférieure à une valeur seuil.

9. Procédé de contrôle selon l'une quelconque des revendications 1 à 8, dans lequel au cours de la troisième étape l'unité de contrôle (20) mesure la position d'un rotor de la machine électrique (4) par rapport à un stator de ladite machine électrique (4).

10. Procédé de contrôle selon l'une quelconque des revendications 1 à 9, dans lequel l'unité de contrôle (20) est configurée pour traiter une donnée de vitesse de déplacement du véhicule et dans lequel la troisième étape est mise en œuvre lorsque ladite vitesse de déplacement du véhicule est nulle.
